# EUROPEAN PATENT APPLICATION

(11) **EP 4 700 852 A1**
(43) Date of publication of application: **25.02.2026**
(21) Application number: 25197496.0
(22) Date of filing: 22.08.2025
(51) Int. Cl.: H01M 4/134, H01M 4/36, H01M 4/38, H01M 4/62, H01M 10/0525

(54) **ACTIVE MATERIAL-CONDUCTIVE AGENT COMPOSITE, ELECTRODE FOR RECHARGEABLE BATTERY INCLUDING SAME, AND RECHARGEABLE BATTERY**

(30) Priority: 23.08.2024 JP 2024143288; 20.08.2025 KR 20250116060
(71) Applicant: SAMSUNG SDI CO., LTD., Yongin-si, Gyeonggi-do 17084 (KR)
(72) Inventor: HAMAGUCHI, Yohei, Kanagawa-ken, 230-0027 (JP)
(74) Representative: Michalski Hüttermann & Partner Patentanwälte mbB

(57) **Abstract**

Examples of the present disclosure maintain high charge/discharge efficiency of a rechargeable battery including an electrode including an active material such as a silicon-based active material, and manufactured by a dry method. Examples of the present disclosure include an active material-conductive agent composite including an active material capable of intercalating and deintercalating lithium, a conductive agent, and a first binder that binds the active material and the conductive agent. The active material is in the form of spherical particles, and the conductive agent is bound to a surface of the active material so as to extend in the radial direction of the active material by the first binder.

## Description

### BACKGROUND

### 1. Field

The present disclosure relates to an active material-conductive agent composite, an electrode for a rechargeable battery including the active material-conductive agent composite, and a rechargeable battery including the electrode.

### 2. Description of the Related Art

Rechargeable batteries, including lithium ion rechargeable batteries, are typically utilized as power sources for, e.g., smart phones, notebook computers, and/or the like. As these electronic devices have become smaller and lighter, rechargeable batteries that have higher energy densities are more advantageous.

The demand for rechargeable batteries to be utilized as a power source for, e.g., electric vehicles, hybrid vehicles, and/or the like, has been increasing, and there is a demand for rechargeable batteries having relatively high energy density to ensure at least the same performance as comparable gasoline engines.

To meet this demand for improved energy density, high-capacity electrodes including, for example, carbon-based active materials are advantageous.

These electrodes are conventionally manufactured using a wet manufacturing method in which active materials, conductive additives, binders, and the like, are dispersed in a solvent, stirred, and then coated on a current collector foil and dried. Recently, a dry manufacturing method has been developed that has the potential to reduce or eliminate the drying process in the wet method, and thereby reduce the environmental load (Japanese Patent No. 7227328).

### SUMMARY

However, when an electrode is manufactured using a dry manufacturing method and includes an active material having a relatively large volume change during charge and discharge, such as a silicon-based active material, which is a high-capacity active material, charge and discharge efficiency of a rechargeable battery equipped with the electrode may be significantly reduced.

The example embodiments of this disclosure address the above-mentioned challenges, and one of the causes of the above-mentioned challenges is that the conductive path is cut off and the active material is isolated at the end of discharge due to expansion and contraction of the active material during charge and discharge.

That is, some example embodiments include the following:
[1] An active material-conductive agent composite which includes an active material capable of intercalating and deintercalating lithium,
   a conductive agent,
   a first binder that binds the active material and the conductive agent,
   wherein the active material is in the form of spherical particles, and
   the conductive agent is bound to a surface of the active material so as to elongate in a diametric direction of the active material by the first binder.
[2] The active material-conductive agent composite described in [1], wherein the conductive agent is in a fibrous form.
[3] The active material-conductive agent composite as described in [1] or [2], wherein the active material is a silicon-based active material.
[4] An electrode for a rechargeable battery including:
   the active material-conductive agent composite described in any one of [1] to [3],
   a second binder which is a different binder from the first binder,
   a third binder which is the same as or different from the first binder,
   wherein the second binder is in a fibril form made of or including a fluorine-based polymer.
[5] The electrode for the rechargeable battery as described in [4], wherein the second binder and the third binder bind a plurality of the active material-conductive agent composite to each other.
[6] The electrode for the rechargeable battery as described in [4] or [5], wherein the electrode includes a current collector, an electrode mixture layer, and a conductive adhesive layer between the current collector and the electrode mixture layer, and
   the electrode mixture layer includes the active material-conductive agent composite, the second binder, and the third binder.
[7] The electrode for the rechargeable battery as described in any one of [4] to [6], wherein the conductive adhesive layer includes a carbon material, a binder for a base layer, and a dispersant, and the binder for the base layer is or includes a styrene-butadiene copolymer or a styrene-acrylic acid ester-based copolymer.
[8] A rechargeable battery including a positive electrode and a negative electrode, wherein the negative electrode is the electrode for the rechargeable battery as described in any one of [4] to [7].
[9] A non-aqueous electrolyte rechargeable battery including a positive electrode and a negative electrode, wherein the negative electrode is or includes the electrode for the rechargeable battery as described in any one of [4] to [7].

According to the example embodiments, the charge/discharge efficiency of a rechargeable battery equipped with an electrode including an active material such as a silicon-based active material and manufactured by a dry method can be maintained at a high level.

### BRIEF DESCRIPTION OF THE DRAWING

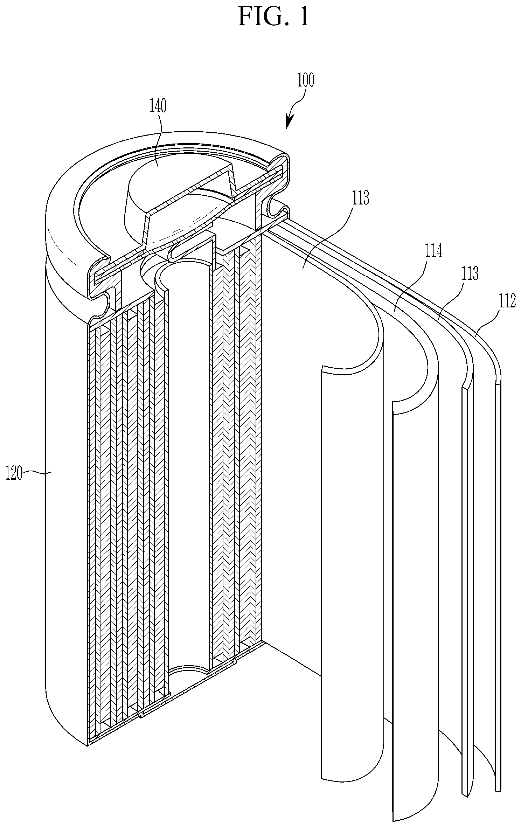

FIG. 1 is a schematic view illustrating a non-aqueous electrolyte rechargeable battery according to some example embodiments.

### DETAILED DESCRIPTION

Reference is now made in more detail to embodiments, examples of which are illustrated in the accompanying drawing. In this regard, the present example embodiments may have different forms and should not be construed as being limited to the descriptions set forth herein. Accordingly, the example embodiments are merely described, by referring to the drawing, to explain aspects of the present description. As utilized herein, the term "and/or" includes any and all combinations of one or more of the associated listed items. Expressions such as "at least one of," when preceding a list of elements, modify the entire list of elements and do not modify the individual elements of the list. As the present disclosure described hereinafter allows for one or more suitable changes and numerous example embodiments, example embodiments are illustrated in the drawing and described in more detail in the detailed description.

Hereinafter, example embodiments are described in detail so that those of ordinary skill in the art can readily implement the embodiments. However, this disclosure may be embodied in many different forms and is not construed as limited to the example embodiments set forth herein.

The terminology used herein is used to describe example embodiments only, and is not intended to limit the present disclosure. The singular expression includes the plural expression unless the context clearly dictates otherwise. Unless otherwise defined, all chemical names, technical and scientific terms, and terms defined in common dictionaries should be interpreted as having meanings consistent with the context of the related art, and should not be interpreted in an ideal or overly formal sense. It is understood that, although the terms first, second, and the like, may be used herein to describe various elements, these elements should not be limited by these terms. These terms are only used to distinguish one element from another element. Thus, a first element could be termed a second element without departing from the teachings of the present disclosure. Similarly, a second element could be termed a first element.

As used herein, the phrase "combination thereof" means a mixture, a laminate, a composite, a copolymer, an alloy, a blend, a reaction product, and the like of the constituents.

As used herein, singular forms such as "a," "an," and "the" are intended to include the plural forms as well, unless the context clearly indicates otherwise. As used herein, the terms "use," "utilizing," and "used" may be considered synonymous with the terms "utilize," "utilizing," and "utilized," respectively. As used herein, expressions such as "at least one of," "one of," and "selected from," when preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Herein, it should be understood that terms such as "comprises," "comprise," "comprising," "includes," "including," "include," "having," "has," or "have" are intended to designate the presence of an embodied feature, number, step, element, or a combination thereof, but these terms do not preclude the possibility of the presence or addition of one or more other features, number, step, element, or a combination thereof.

The term "may" is understood to refer to "one or more example embodiments of the present disclosure," some of which include the described element and some of which exclude that element and/or include an alternate element. Similarly, alternative language such as "or" refers to "one or more example embodiments of the present disclosure," each including a corresponding listed item. Spatially relative terms, such as "beneath," "below," "lower," "above," "upper," "bottom," "top," and the like, may be used herein for ease of description to describe one element or feature's relationship to another element(s) or feature(s) as illustrated in the drawing. It is understood that the spatially relative terms are intended to encompass different orientations of the device in use or operation in addition to the orientation depicted in the drawing. For example, when the device in the drawing is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly. In this context, "consisting essentially of" means that any additional components do not materially affect the chemical, physical, optical or electrical properties of the semiconductor film. Further, in this specification, the phrase "on a plane," or "plan view," means viewing a target portion from the top, and the phrase "on a cross-section" means viewing a cross-section formed by vertically cutting a target portion from the side. In the present disclosure, "not include (or not including) a, or any, component", "exclude (or excluding) a, or any, component", "'component'-free", and/or the like refers to that the "component" not being added, selected or utilized as a component or compound in the composition, but the "component" of less than a suitable amount may still be included due to other impurities and/or external factors.

It is understood that when an element such as a layer, film, region, or substrate is referred to as being "on" another element, the element can be directly on the other element or intervening elements may also be present there between. In contrast, when an element is referred to as being "directly on" another element, there are no intervening elements present.

In addition, "layer" herein includes not only a shape formed on the whole surface when viewed from a plan view, but also a shape formed on a partial surface.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

As used herein, poly(meth)acrylic acid refers to polyacrylic acid (PAA) and/or polymethacrylic acid (PMAA).

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

Hereinafter, a specific configuration of a non-aqueous electrolyte rechargeable battery according to some example embodiments is described.

### 1. Basic Configuration of Non-aqueous Electrolyte Rechargeable Battery:

The non-aqueous electrolyte rechargeable battery according to some example embodiments is a rechargeable lithium ion battery including a positive electrode, a negative electrode, a separator, and a non-aqueous electrolyte configured to accommodates them therein.

The shape of the rechargeable lithium ion battery is not particularly limited, but may be, for example, a cylindrical shape, a prismatic shape, a laminated shape, or a button shape.

Hereinafter, a non-aqueous electrolyte rechargeable battery according to an example embodiment is described with reference to FIG. 1. FIG. 1 is a schematic view illustrating a non-aqueous electrolyte rechargeable battery according to an example embodiment. Referring to FIG. 1, a rechargeable lithium battery 100 according to an example embodiment of the present disclosure includes a battery cell including a positive electrode 114, a negative electrode 112 facing the positive electrode 114, a separator 113 between the positive electrode 114 and the negative electrode 112, and an electrolyte (not shown) for a rechargeable lithium battery impregnating the positive electrode 114, the negative electrode 112, and the separator 113, a battery case 120 housing the battery cell, and a sealing member 140 sealing the battery case 120.

### 1-1. Positive Electrode:

The positive electrode includes a positive electrode current collector, and a positive electrode mixture layer on the positive electrode current collector.

The positive electrode current collector may be or include any material as long as the material is a conductor, and is, for example, plate-shaped or thin, and may be desirably made of or include aluminum, stainless steel, nickel coated steel, or the like.

The positive electrode mixture layer may include at least a positive electrode active material, and may further include a conductive agent and a positive electrode binder.

The positive electrode active material may be or include, for example, a transition metal oxide or a solid solution oxide including lithium, and is not particularly limited as long as the positive electrode active material can electrochemically intercalate and deintercalate lithium ions. Examples of the transition metal oxide including lithium may include Li_{1.0}Ni_{0.88}Co_{0.1}Al_{0.01}Mg_{0.01}O₂, and the like. In addition, examples of the transition metal oxide including lithium may also include Li·Co composite oxides such as LiCoO₂, and Li·Ni·Co-Mn-based composite oxides such as LiNiₓCo_{y}Mn_{z}O₂, Li-Ni-based composite oxide such as LiNiO₂, or Li-Mn-based composite oxides such as LiMn₂O₄, and the like. Examples of the solid solution oxide may include LiₐMnₓCo_{y}NizO₂ (1.150 ≤ a ≤ 1.430, 0.45 ≤ x ≤ 0.6, 0.10 ≤ y ≤ 0.15, 0.20 ≤ z ≤ 0.28), LiMn_{1.5}Ni_{0.5}O₄. On the other hand, a content (content ratio) of the positive electrode active material is not particularly limited, as long as the content ratio is applicable to the positive electrode mixture layer of a non-aqueous electrolyte rechargeable battery. Moreover, these compounds may be used alone, or may be used in mixture of plural types.

The conductive agent is not particularly limited as long as the conductive agent increases the conductivity of the positive electrode. Examples of the conductive agent include agents containing one or more of carbon black, natural graphite, artificial graphite, fibrous carbon, and nanocarbon materials.

Examples of the carbon black may include at least one of furnace black, channel black, thermal black, Ketjen black, and acetylene black.

Examples of the fibrous carbon may include carbon fibers and the like.

Examples of the nanocarbon material may include at least one of carbon nanotubes, carbon nanofibers, single-layer graphene, and multi-layer graphene.

An amount of the conductive agent is not particularly limited, and may be any content applicable to the positive electrode mixture layer of a non-aqueous electrolyte rechargeable battery.

The positive electrode binder may be or include at least one of, for example, a fluorine-containing resin such as polytetrafluoroethylene (PTFE) and polyvinylidene fluoride, an ethylene-containing resin such as a styrene-butadiene rubber, and ethylene propylene-diene terpolymer, an acrylonitile-butadiene rubber, a fluororubber, polyvinyl acetate, polymethylmethacrylate, polyethylene, polyvinyl alcohol, carboxymethyl cellulose, a carboxymethyl cellulose derivative (a salt of carboxymethyl cellulose, and the like), nitrocellulose, and the like. The positive electrode binder is not particularly limited as long as the positive electrode binder is capable of binding the positive electrode active material and the conductive agent to the positive electrode current collector. From the viewpoint of increasing a weight per unit area of the positive electrode mixture layer, it is desirable that the positive electrode mixture layer includes a fluorine-containing resin such as polytetrafluoroethylene (PTFE) or polyvinylidene fluoride as a binder, and a binder content in the positive electrode mixture layer is greater than or equal to about 0.5 parts by weight and less than or equal to about 10 parts by weight. When the binder content is within this range, a mechanical strength of the positive electrode mixture layer is improved to a level that can ensure desired processability, and the energy density of the positive electrode plate can be increased.

### 1-2. Negative Electrode:

The negative electrode is described in detail below.

### 1-3. Separator:

The separator is not particularly limited, and any separator may be used as long as the separator is used as a separator for a rechargeable lithium ion battery. The separator may be or include a porous film, nonwoven fabric, or the like that exhibits desired or improved high-rate discharge performance alone or in combination. The resin constituting the separator may be or include, for example, at least one of a polyolefin-based resin such as polyethylene, polypropylene, and the like, a polyester resin such as polyethylene terephthalate, polybutylene terephthalate, and the like, polyvinylidene difluoride, a vinylidene difluoride-hexafluoropropylene copolymer, a vinylidene difluoride-perfluorovinyl ether copolymer, a vinylidene difluoride-tetrafluoroethylene copolymer, a vinylidene difluoride-trifluoroethylene copolymer, a vinylidene difluoride-hexafluoroacetone copolymer, a vinylidene difluoride-ethylene copolymer, a vinylidene difluoride-propylene copolymer, a vinylidene difluoride-trifluoropropylene copolymer, a vinylidene difluoride-tetrafluoroethylene-hexafluoropropylene copolymer, a vinylidene difluoride-ethylene-tetrafluoroethylene copolymer, or the like. On the other hand, a porosity of the separator is not particularly limited, and it is possible to arbitrarily apply a porosity of the separator of a conventional rechargeable lithium ion battery.

On the surface of the separator, there may be a heat resistant layer including inorganic particles to improve heat resistance, or a layer including an adhesive for fixing the battery element by adhering to the electrode components. The aforementioned inorganic particles may include at least one of Al₂O₃, AlOOH, Mg(OH)₂, SiO₂, and the like. Examples of the adhesive may include at least one of a vinylidene fluoride-hexafluoropropylene copolymer, an acid-modified product of vinylidene fluoride polymers, and a styrene-(meth)acrylic acid ester copolymer.

### 1-4. Non-aqueous Electrolyte:

As the non-aqueous electrolyte solution, the same non-aqueous electrolyte solution that has conventionally been used for rechargeable lithium ion batteries may be used without particular limitation. The non-aqueous electrolyte solution has a composition in which an electrolyte salt is included in a non-aqueous solvent, which is a solvent for the electrolyte solution. Examples of the non-aqueous solvent may include at least one of cyclic carbonate esters such as propylene carbonate, ethylene carbonate, butylene carbonate, chloroethylene carbonate, fluoroethylene carbonate, and vinylene carbonate, cyclic esters such as γ-butyrolactone and γ-valerolactone, chain carbonates such as dimethyl carbonate, diethyl carbonate, or ethylmethyl carbonate, chain esters such as methylformate, methylacetate, methylbutyrate, ethyl propionate, propyl propionate, ethers such as tetrahydrofuran or a derivative thereof, 1,3-dioxane, 1,4-dioxane, 1,2-dimethoxyethane, 1,4-dibutoxyethane, methyldiglyme, ethylene glycol monopropyl ether, or propylene glycol monopropyl ether, nitriles such as acetonitrile and benzonitrile, dioxolane or a derivative thereof, ethylene sulfide, sulfolane, sultone, or a derivative thereof, which may be used alone or in a mixture of two or more solvents. On the other hand, when two or more types of non-aqueous solvents are mixed, a mixing ratio of each non-aqueous solvent may be a mixing ratio that may be used in a conventional rechargeable lithium ion battery.

Examples of the electrolyte salt may include an inorganic ion salt including at least one of lithium (Li), sodium (Na) or potassium (K) such as or including at least one of LiClO₄, LiBF₄, LiAsF₆, LiPF₆, LiPF₆₋ₓ(CₙF₂ₙ₊₁)ₓ [provided that 1<x<6 and n=1 or 2], LiSCN, LiBr, LiI, Li₂SO₄, Li₂B₁₀Cl₁₀, NaClO₄, Nal, NaSCN, NaBr, KClO₄, KSCN, or an organic ion salt such as LiCF₃SO₃, LiN(CF₃SO₂)₂, LiN(C₂F₅SO₂)₂, LiN(CF₃SO₂)(C₄F₉SO₂), LiC(CF₃SO₂)₃, LiC(C₂F₅SO₂)₃, (CH₃)₄NBF₄, (CH₃)₄NBr, (C₂Hs)₄NClO₄, (C₂H₅)₄NI, (C₃H₇)₄NBr, (n-C₄H₉)₄NClO₄, (n-C₄H₉)₄NI, (C₂H₅)₄N-maleate, (C₂H₅)₄N-benzoate, (C₂H₅)₄N-phthalate, lithium stearyl sulfonate, lithium octyl sulfonate, lithium dodecylbenzene sulfonate, and the like, and it is also possible to use these ionic compounds alone, or in a mixture of two or more types of compounds. A concentration of the electrolyte salt may be the same as the concentration of a non-aqueous electrolyte solution used in a conventional rechargeable lithium ion battery, and is not particularly limited. In the present example embodiment, it may be desirable to use a non-aqueous electrolyte solution including the above-described lithium compound (electrolyte salt) at a concentration greater than or equal to about 0.8 mol/L and less than or equal to about 1.5 mol/L.

Meanwhile, various additives may be added to the non-aqueous electrolyte solution. Examples of such additives may include at least one of negative electrode-acting additives, positive electrode-acting additives, ester additives, carbonate ester additives, sulfuric acid ester additives, phosphoric acid ester additives, boric acid ester additives, acid anhydride additives, and electrolyte additives. Any one of the above additives may be added to the non-aqueous electrolyte solution, and multiple types of additives may be added to the non-aqueous electrolyte solution.

### 2. Characteristic Configuration of Non-aqueous Electrolyte Rechargeable Battery According to an Example Embodiment:

Hereinafter, the characteristic configuration of the non-aqueous electrolyte rechargeable battery according to some example embodiments is described.

The negative electrode includes a negative electrode current collector, a negative electrode mixture layer on the negative electrode current collector, and an adhesive layer (also referred to as a base layer) between the negative electrode current collector and the negative electrode mixture layer.

The negative electrode current collector may be any conductive material, may be, for example, plate-shaped or thin-walled, and may be composed of or include copper, stainless steel, nickel-plated steel, or the like.

In the present example embodiment, the negative electrode mixture layer is a self-supporting layer formed by a dry method, and includes a negative electrode active material, a conductive agent, and a negative electrode binder.

The negative electrode active material is not particularly limited as long as the negative electrode active material is in particle form and can electrochemically intercalate and deintercalate lithium ions. The particle shape of the negative electrode active material may be varied, such as spherical, polygonal, needle-shaped, scale-shaped, or irregularly shaped. In the present example embodiment, as an example, a spherical negative electrode active material is used. A spherical shape means that the overall shape as a particle is spherical or approximately spherical. The particle size of the negative electrode active material may be in the range of greater than or equal to about 0.1 µm and less than or equal to about 50 µm, and in the present example embodiment, as an example, a negative electrode active material having a particle size in a range of greater than or equal to about 1 µm and less than or equal to about 20 µm may be used.

The negative electrode active material includes at least one of, for example, a graphite active material (artificial graphite, natural graphite, a mixture of artificial graphite and natural graphite, natural graphite coated with artificial graphite, and the like), a silicon-based active material (a mixture or composite of a particulate of silicon (Si) or an oxide thereof and a graphite active material, a silicon particulate, an alloy including silicon as a basic material), a tin-based active material (for example, a mixture or composite of a particulate of tin (Sn) or an oxide thereof and a graphite active material, a tin particle, an alloy including tin as a basic material), metallic lithium, a titanium oxide compound such as Li₄Ti₅O₁₂, lithium nitride, and the like.

As the negative electrode active material, only one type of negative electrode active material from those listed above may be used, or two or more types may be used in combination. Among these types of negative electrode active material, it is advantageous to include a high-capacity active material exceeding about 350 mAh/g, about 500 mAh/g or more, about 1000 mAh/g or more, and about 1500 mAh/g or more. Examples of such high-capacity active material may include the silicon-based active material. The aforementioned silicon oxide may be represented as SiOₓ (0≤x≤2). An amount of the negative electrode active material in the negative electrode mixture layer (the total amount when two or more types of negative electrode active materials are used) may be greater than or equal to about 80 mass% and less than or equal to about 99 mass%, greater than or equal to about 85 mass% and less than or equal to about 99 mass%, or greater than or equal to about 90 mass% and less than or equal to about 99 mass% when the total negative electrode mixture layer is 100 mass%.

The conductive agent is not particularly limited as long as the conductive agent increases the conductivity of the negative electrode mixture layer. Examples of the conductive agent include those containing at least one of carbon black, natural graphite, artificial graphite, fibrous carbon, and nanocarbon materials.

Examples of the carbon black may include at least one of furnace black, channel black, thermal black, Ketjen black, and acetylene black.

Examples of the fibrous carbon may include a carbon fiber.

Examples of the nanocarbon material may include at least one of carbon nanotubes, carbon nanofibers, single-layer graphene, and multi-layer graphene.

Among these carbon materials, the carbon materials having a thin and long shape such as an oval shape, needle shape, or rod shape may be desirable, and fibrous carbon may also be desirable.

An amount of the conductive agent in the negative electrode mixture layer may be greater than or equal to about 0.01 mass% and less than or equal to about 5 mass%, greater than or equal to about 0.05 mass% and less than or equal to about 3 mass%, or greater than or equal to about 0.1 mass% and less than or equal to about 1 mass%, when the total negative electrode mixture layer is 100 mass%.

The negative electrode binder in the present example embodiment includes three types of binders: a first binder, a second binder, and a third binder. These first binder, second binder and third binder are different types of binders.

The first binder is not particularly limited and may be or include any agent capable of binding the conductive agent to the aforementioned negative electrode active material. Because the first binder is supplied to the surface of the active material in a state of being dissolved or dispersed in a solvent to form a layer in which part or all of the surface of the active material becomes the binder, it is desirable that the binder be readily dissolved or dispersed in the solvent used. From the perspective of reducing environmental load, it is more desirable for the first binder to be water-soluble. As described above, the first binder is desirably one that can be dissolved or dispersed in a solvent, does not dissolve in an electrolyte, and has charge/discharge resistance (the property of not being transformed during charge/discharge). Examples of such a first binder may include various binders conventionally used in rechargeable batteries, such as, e.g., acrylic acid-acrylonitrile copolymer, acrylic acid-sodium styrene sulfonate-acrylonitrile copolymer, carboxymethyl cellulose, or PVDF.

The first binder binds the aforementioned conductive agent to the surface of the aforementioned negative electrode active material so as to extend from the surface of the negative electrode active material in the diametric direction of the negative electrode active material, thereby forming an active material-conductive agent composite, which is a composite of the negative electrode active material and the conductive agent. As described above, the active material-conductive agent composite has a chestnut shape by arranging the conductive agent to extend outward from the surface of the negative electrode active material.

An amount of the first binder in the negative electrode mixture layer may be greater than or equal to about 0.001 mass% and less than or equal to about 1 mass%, greater than or equal to about 0.005 mass% and less than or equal to about 0.5 mass%, or greater than or equal to about 0.01 mass% and less than or equal to about 0.1 mass%, when the total negative electrode mixture layer is 100 mass%.

The second binder is or includes a fibril-shaped binder, which forms a matrix, lattice and/or web with each other to provide the negative electrode mixture layer with the mechanical strength necessary for manufacturing the binder as a self-supporting film. As this second binder, a fibrillated binder generally included in an electrode mixture layer manufactured by the dry method may be widely used. This second binder includes, for example, a fluorine-based polymer. The fluorine-based polymer constituting the second binder may be or include, for example, one or more kinds of polytetrafluoroethylene (PTFE), ultrahigh molecular weight polyethylene (UHMWPE), and/or other suitable fibrillating materials.

An amount of the second binder in the negative electrode mixture layer may be greater than or equal to about 0.01 mass% and less than or equal to about 5 mass%, greater than or equal to about 0.05 mass% and less than or equal to about 4 mass%, or greater than or equal to about 0.1 mass% and less than or equal to about 3 mass%, when the total negative electrode mixture layer is 100 mass%.

It may be desirable that the amount of the second binder is greater than the amount of the first binder described above.

The third binder is not particularly limited as long as the third binder binds the components forming the negative electrode mixture layer together, but it is desirable that the third binder does not dissolve in the electrolyte solution, has charge/discharge resistance (a property of not deforming during charge/discharge), and binds the components by fusion. From the perspective of making the manufacturing process as simple as possible, it is more desirable to be able to heat melt and heat bond at the temperature used in the conventional negative electrode manufacturing process. Examples of such a third binder may include, for example, polyethylene and polyvinylidene fluoride (PVDF). The third binder may be in a form of particulates that can be inserted between each component to facilitate binding of each component constituting the negative electrode mixture layer to each other. For the same reason, it is desirable that the particle diameter of the third binder may be as small as possible, for example, less than or equal to about 1 µm, and may be as small as possible on the nano-order.

An amount of the third binder in the negative electrode mixture layer may be greater than or equal to about 0.01 mass% and less than or equal to about 10 mass%, greater than or equal to about 0.05 mass% and less than or equal to about 6 mass%, or greater than or equal to about 0.1 mass% and less than or equal to about 4 mass%, when the total negative electrode mixture layer is 100 mass%.

It is desirable that the amount of the third binder is greater than the amount of the first binder described above.

The base layer is disposed between the negative electrode current collector and the negative electrode mixture layer, and reduces or suppresses the negative electrode mixture layer from falling off or peeling off.

The base layer includes a carbon material, a binder for the base layer, and a dispersant.

The carbon material is not particularly limited as long as the carbon material increases the conductivity of the base layer. Examples of the carbon material may include at least one of carbon black, natural graphite, artificial graphite, fibrous carbon, and nanocarbon materials.

Examples of the carbon black may include at least one of furnace black, channel black, thermal black, Ketjen black, and acetylene black.

Examples of the fibrous carbon include a carbon fiber.

Examples of the nanocarbon material may include at least one of carbon nanotubes, carbon nanofibers, single-layer graphene, and multi-layer graphene.

Among carbon materials, it may be advantageous to use carbon black, which is straightforward to disperse. Among carbon blacks, it may be advantageous to use acetylene black, which has high conductivity.

An amount of carbon material in the base layer may be greater than or equal to about 1 mass% and less than or equal to about 35 mass%, or greater than or equal to about 5 mass% and less than or equal to about 30 mass%. When the amount of the carbon material is greater or equal to about 1 mass%, the conductivity of the base layer becomes desired, and when the amount of the carbon material is greater or equal to about 5 mass%, the conductivity of the base layer becomes even more desired. On the other hand, lowering the amount of carbon material allows for increasing the amount of the binder or dispersant for the base layer mentioned above, which leads to the expression of desired adherence or improvement in dispersibility of the base layer. For this reason, the amount of carbon material may be less than or equal to about 35 mass%, or less than or equal to about 30 mass%.

The binder for the base layer binds each component, such as a carbon material, included in the base layer to one another, and also binds the base layer and the negative electrode current collector or the negative electrode mixture layer. For example, the binder for the base layer according to the present example embodiment includes, for example, a styrene-butadiene copolymer (also referred to as SBR), and may be composed of or include a styrene-butadiene copolymer. The styrene-butadiene copolymer is a copolymer whose main structural unit is a polymerization of styrene and butadiene.

When the aforementioned base layer and the aforementioned negative electrode current collector or negative electrode mixture layer are bound, adhesive strength may be exhibited due to the softening of the binder for the base layer. The temperature at which styrene-butadiene copolymer softens is the glass transition temperature thereof. In general, the glass transition temperature of styrene-butadiene copolymers is lower than the glass transition temperature of fluorine resin such as PVDF (melting point: 177 °C), and thus the temperature of the binding process may be reduced, which is desirable from the viewpoint of reducing manufacturing costs.

In the styrene-butadiene copolymers, emulsion polymerization SBR and solution polymerization SBR may be included. The emulsion polymerization SBR may be obtained in the form of an aqueous dispersion (also called emulsion or latex). When synthesizing SBR using emulsion polymerization, an emulsifier may be sometimes added. In order to stabilize the dispersion of particulates of SBR in water, the particulates of SBR are sometimes modified in small amounts with monomers such as unsaturated carboxylic acids or unsaturated nitrile compounds. In order to stabilize the dispersion of SBR particulates in water, a surfactant may be sometimes added. The SBR particulates may include a combined heterogeneous polymer. The particulates of the combined SBR may have a structure such as a core-shell structure or an island structure.

In the present example embodiment, an aqueous dispersion of an emulsion-polymerized styrene-butadiene copolymer may be used as a binder for the base layer. The styrene-butadiene copolymer has low viscosity in aqueous dispersion. The low viscosity of the binder for the base layer may contribute to reducing the viscosity of the slurry for the base layer. The low viscosity of the slurry for the base layer may be advantageous in conducting thin film coating. The molecular weight of the emulsion polymerized styrene-butadiene copolymer is relatively large, for example, in a range of about 10,000 to about 3,000,000. A larger molecular weight of the binder for the base layer can contribute to increasing the strength of the binder for the base layer and, further, increasing the strength of the base layer. A high strength base layer can contribute to lowering the defect rate of the coated film.

As described above, the aqueous dispersion of the styrene-butadiene copolymer may include an additive including an emulsifier and a surfactant. Additionally, the aqueous dispersion of the styrene-butadiene copolymer may be modified in a small amount with monomers such as unsaturated carboxylic acids or unsaturated nitrile compounds. The additive or modifications may affect the pH of the aqueous dispersion of the styrene-butadiene copolymer.

When preparing a slurry for the base layer by mixing a binder for the base layer and a material other than the binder for the base layer, there is a desirable range of pH for the aqueous dispersion of the binder for the base layer. For example, when the pH of a material other than the binder for the base layer is less than 7, and the binder for the base layer is not strongly alkaline but is alkaline close to neutral, more desirably neutral or acidic, the formation of agglomerates in the slurry for the base layer due to acid-base interaction may be reduced or suppressed. When the formation of agglomerates in the slurry for the base layer may be reduced or suppressed, the reduction in the coating properties may be reduced or suppressed when coating the slurry for the base layer.

In this example embodiment, polyacrylic acid was used as a dispersant for the base layer as described below. Aqueous solutions of polyacrylic acid have a pH of less than about 7. In order to reduce or suppress the formation of agglomerates by the mechanism described above, a binder having a pH of about 8 or lower may be used as the binder for the base layer.

The glass transition temperature of the e styrene-butadiene copolymer may be less than or equal to about 30 °C, and greater than equal to about -30 °C. When the styrene-butadiene copolymer is in an environment at a temperature that is higher than the glass transition temperature, the styrene-butadiene copolymer softens. Because the styrene-butadiene copolymer is sufficiently softened, desired adherence is exhibited in the process of adhering the negative electrode mixture layer to the base layer. When the glass transition temperature is less than or equal to about 30 °C, desired adherence is obtained even when the temperature of the hot roll press used to adhere the negative electrode mixture layer to the base layer is not excessively high, such as, e.g., exceeding 120 °C. The glass transition temperature of the styrene-butadiene copolymer may be greater than or equal to about -20 °C and less than or equal to about 20 °C, or greater than or equal to about -15 °C and less than or equal to about 15 °C.

When a styrene-butadiene copolymer is immersed in an electrolyte solution in a dried state, the styrene-butadiene copolymer accepts the electrolyte solution and swells. When the swelling degree is too high, the swelling may contribute to a decrease in the adhesive strength between the electrode mixture layer and the base layer. Therefore, as a styrene-butadiene copolymer, one having a swelling degree of less than about 278 mass% may be desirable. For example, a desirable swelling degree may be less than or equal to about 200 mass%, or less than or equal to about 150 mass%.

Examples of the styrene-butadiene copolymer satisfying each of the properties described above may include, for example, TRD2001, TRD102A, TRD104A from ENEOS Materials Co., Ltd., and BM-451B from Zeon Corporation.

In order to sufficiently reduce or prevent the detachment or peeling of the electrode mixture layer by the base layer, an amount of the binder for the base layer in the base layer may be greater than or equal to about 50 mass%. In addition, in order to sufficiently secure the conductivity of the base layer, an amount of the binder in the base layer may be less than or equal to about 90 mass%. The amount of the binder for the base layer in the base layer may be greater than or equal to about 55 mass% and less than or equal to about 85 mass%, greater than or equal to about 60 mass% and less than or equal to about 85 mass%, or greater than or equal to about 60 mass% and less than or equal to about 80 mass%.

The dispersant is used to substantially uniformly disperse the carbon material and the binder for the base layer, and in this example embodiment, polyacrylic acid corresponds to this.

The polyacrylic acid has a plurality of carboxyl groups in the molecule, and these carboxyl groups may be neutralized by alkali metal ions such as sodium ions.

It is desirable that the polyacrylic acid used in this example embodiment has these carboxyl groups not neutralized as much as possible. For example, among the carboxyl groups of the polyacrylic acid, a proportion of neutralized carboxyl groups may be less than or equal to about 20%, less than or equal to about 10%, and may be 0% (i.e., the carboxyl groups of the polyacrylic acid are not neutralized).

An amount of the dispersant in the base layer may be greater than or equal to about 1 mass% and less than or equal to about 30 mass%, greater than or equal to about 2 mass% and less than or equal to about 25 mass%, or greater than or equal to about 3 mass% and less than or equal to about 20 mass%. When the amount of the dispersant is greater than or equal to about 1 mass%, the aforementioned carbon material and the binder for the base layer may be substantially uniformly dispersed, and when the amount of the dispersant is greater than or equal to about 2 mass%, more uniform dispersion may be obtained. On the other hand, lowering the amount of the dispersant allows for increasing the amount of the aforementioned binder or conductive agent for the base layer, which leads to improve battery performance due to the occurrence of desired adherence of the base layer or low resistance. For this reason, the amount of the dispersant may be less than or equal to about 30 mass%, or less than or equal to about 25 mass%.

### 3. Manufacturing Method of Non-aqueous Electrolyte Rechargeable Battery According to an Example Embodiment:

Hereinafter, the manufacturing method of the rechargeable lithium ion battery according to the present example embodiment is described.

### 3-1. Manufacturing Method of Positive Electrode:

The positive electrode according to the present example embodiment is manufactured as follows.

A positive electrode mixture sheet may be manufactured by a dry manufacturing method in which a positive electrode active material, a conductive agent, and a positive electrode binder are mixed in a desired ratio, kneaded to manufacture a positive electrode mixture mass, and the positive electrode mixture mass is compressed. The positive electrode can be manufactured by a dry method in which this positive electrode mixture sheet is laminated onto a positive electrode current collector using a hot roll press or the like. Meanwhile, the manufacturing apparatus used in the process of laminating the positive electrode mixture sheet onto the positive electrode current collector by dry method is not particularly limited. As manufacturing apparatuses used in the process of laminating a positive electrode mixture sheet onto a positive electrode current collector, a roll press device, a hot roll press device, a dry laminator, a calender processing device, a heat press device, and the like, are considered.

In addition, a positive electrode slurry may be prepared by dispersing a mixture of materials forming the positive electrode mixture layer in a solvent for positive electrode slurry, and the positive electrode slurry may be coated on a positive electrode current collector and dried to form a positive electrode mixture layer.

### 3-2. Manufacturing Method of Negative Electrode:

First, each component contained in the aforementioned base layer is suspended in a solvent such as water to prepare a base layer slurry in a slurry state, and this base layer slurry is coated and dried on the negative electrode current collector to form a base layer. Here, a coating amount of the base layer slurry is such that the thickness of the base layer after drying may be, for example, greater than or equal to about 0.5 µm and less than or equal to about 5 µm. The thickness of the base layer after drying may be greater than or equal to about 0.5 µm and less than or equal to about 2 µm, and for example, greater than or equal to about 0.5 m and less than or equal to about 1.5 µm. Meanwhile, the method of coating is not particularly limited. The coating method may include a knife coater method, a gravure coater method, a reverse roll coater method, a slit die coater method, and the like. Each of the following coating processes is also performed by the same method.

Next, the first binder dissolved in a solvent such as water, the negative electrode active material, and the conductive agent are mixed, and the mixture is dried to produce an active material-conductive agent negative electrode composite in which the conductive agent is bound to the surface of the negative electrode active material by the first binder. When the mixture is dried, the conductive agent is dried and fixed in a state where the conductive agent is arranged like chestnut burrs between the negative electrode active materials by capillary action.

The active material-conductive agent composite manufactured in this manner is mixed with the second binder and the third binder in a desired ratio, kneaded to produce a negative electrode mixture mass, and a negative electrode mixture sheet is manufactured by a dry manufacturing method of compressing this negative electrode mixture mass. In addition, the negative electrode mixture mass sheet manufactured in this manner may include not only an active material composited with a conductive agent, but also an active material that is not composited with a conductive agent. The negative electrode is manufactured by a dry method in which the negative electrode composite sheet is laminated on the base layer using a hot roll press or the like. Meanwhile, the manufacturing apparatus used in the process of laminating the negative electrode mixture sheet on the base layer by dry method is not particularly limited. As manufacturing apparatuses used in the process of laminating a negative electrode mixture sheet on a base layer, a roll press device, a hot roll press device, a dry laminator, a calender processing device, a heat press device, and the like, are considered. In the above laminating process, for example, when using a hot roll press device, the press roll temperature of the hot roll press device can be appropriately changed depending on the material used for the negative electrode mixture layer, but may desirably be greater than or equal to about 20 °C and less than or equal to about 200 °C, greater than or equal to about 40 °C and less than or equal to about 170 °C, or greater than or equal to about 60 °C and less than or equal to about 150 °C. It is desirable that the third binder be heat-fused during this hot roll press.

### 3-3. Manufacturing Method of Non-aqueous Electrolyte Rechargeable Battery:

Next, an electrode structure is manufactured by placing a separator between the positive electrode and the negative electrode. Then, the electrode structure may be processed into a desired shape (e.g., cylindrical shape, prismatic shape, laminated shape, button shape, and the like) and inserted into a container of the above shape. Subsequently, a non-aqueous electrolyte solution is inserted into the corresponding container to impregnate the electrolyte solution into each pore in the separator or a gap between the positive electrode and negative electrode. Accordingly, a rechargeable lithium ion battery is manufactured.

### 4. Effect by the Present Example Embodiment:

According to the non-aqueous electrolyte rechargeable battery configured as described above, the battery includes an active material having a relatively large volume change of 10% or more during charge and discharge, such as a silicon-based active material, and the negative electrode mixture layer is manufactured by a dry method, so that even when there is a volume change of the active material due to charge and discharge and a gap is created between the active materials, a conductive path can be maintained by a conductive agent extending outward from the surface of the negative electrode active material. As a result, the charge/discharge efficiency of the rechargeable battery can be maintained high.

### 5. Another Example Embodiment of the Present Disclosure:

The present disclosure is not limited to the aforementioned example embodiments.

For example, in the above example embodiment, the base layer includes a styrene-butadiene copolymer as a binder for the base layer, but instead of the styrene-butadiene copolymer, the base layer may include a styrene-acrylic acid ester-based copolymer or the like.

The styrene-acrylic acid ester-based copolymer may refer to a copolymer which structural units are mainly composed of or include polymerized styrene and acrylic acid ester, and may be or include, for example, a copolymer including structural units of styrene and acrylic acid ester in a range of greater than or equal to about 80 mass% and less than or equal to about 99 mass%. The acrylic acid ester may include at least one of methyl acrylate, ethyl acrylate, butyl acrylate, isopropyl acrylate, octyl acrylate, 2-ethylhexyl acrylate, isobutyl acrylate, pentyl acrylate, n-hexyl acrylate, isoamyl acrylate, lauryl acrylate, stearyl acrylate, isobornyl acrylate, 2-hydroxyethyl acrylate, 2-hydroxypropyl acrylate, 2-hydroxybutyl acrylate, 2-hydroxy-3-phenoxypropyl acrylate, 2-acryloyloxyethyl-2-hydroxyethyl-phthalate, ethoxy-diethylene glycol acrylate, methoxy-triethylene glycol acrylate, tetrahydrofurfuryl acrylate, phenoxy-polyethylene glycol acrylate, phenoxydiethylene glycol acrylate, phenoxyethyl acrylate, methoxyethyl acrylate, glycidyl acrylate, and 2-acryloxyethyl phosphate, and may include for example butyl acrylate and 2-ethylhexyl acrylate.

The styrene-acrylic acid ester-based copolymer may include a structural unit other than styrene and acrylic acid ester in a range greater than or equal to about 1 mass% and less than or equal to about 20 mass%.

The structural units included in the styrene-acrylic acid ester-based copolymer may include structural units obtained by polymerizing aromatic vinyl compounds such as at least one of p-methylstyrene, m-methylstyrene, o-methylstyrene, o-t-butylstyrene, m-t-butylstyrene, p-t-butylstyrene, and p-chlorostyrene, and o-chlorostyrene; unsaturated methacrylic acid alkyl ester compounds such as at least one of methyl methacrylate, ethyl methacrylate, butyl methacrylate, isopropyl methacrylate, octyl methacrylate, 2-ethylhexyl methacrylate, isobutyl methacrylate, pentyl methacrylate, n-hexyl methacrylate, isoamyl methacrylate, lauryl methacrylate, stearyl methacrylate, and isobornyl methacrylate; (meth)acrylic acid-based compounds such as at least one of methacrylic acid, acrylic acid, itaconic acid, fumaric acid, and maleic acid; unsaturated carboxylic acid amide compounds such as at least one of (meth)acrylamide, N-methyl(meth)acrylamide, N-dimethyl(meth)acrylamide, N-hydroxymethyl(meth)acrylamide, N-butoxymethyl(meth)acrylamide, and N-isobutoxymethyl(meth)acrylamide; and structural units obtained by polymerizing at least one of 2-hydroxyethyl methacrylate, 2-hydroxypropyl methacrylate, 2-hydroxybutyl methacrylate, 2-hydroxy-3-phenoxypropyl methacrylate, ethoxy-methacrylate diethylene glycol, methoxy-triethylene glycol methacrylate, tetrahydrofurfuryl methacrylate, phenoxy-polyethylene glycol methacrylate, phenoxydiethylene glycol methacrylate, phenoxyethyl methacrylate, methoxylethyl methacrylate, glycidyl methacrylate, methacrylonitrile, and 2-methacryloyloxyethyl phosphate.

A glass transition temperature of the styrene-acrylic acid ester-based copolymer may be less than or equal to about 20 °C and greater than or equal to about -20 °C. When the glass transition temperature is within the above range, desired adhesion can be obtained even when the temperature of the hot roll press when adhering the negative electrode mixture layer to the base layer is not set to an excessively high temperature, for example, exceeding about 120 °C. The glass transition temperature of the styrene-acrylic acid ester-based copolymer may be greater than or equal to about -15 °C and less than or equal to about 15 °C, and for example greater than or equal to about -10°C and less than or equal to about 15 °C.

The glass transition temperature of the styrene-acrylic acid ester-based copolymer can be adjusted depending on the type and content of the styrene-acrylic acid ester-based copolymer's structural units. Because the styrene-acrylic acid ester-based copolymer includes greater than or equal to about 80 mass% and less than or equal to about 99 mass% of structural units obtained by polymerizing styrene and acrylic acid ester, the styrene-acrylic acid ester-based copolymer can be adjusted by the content of styrene and acrylic acid ester. For example, because the glass transition temperature of styrene homopolymer is about 100 °C, and the glass transition temperature of 2-ethylhexyl acrylate homopolymer is about -55 °C, by adjusting the contents of styrene and 2-ethylhexyl acrylate, a styrene-acrylic acid ester-based copolymer having a glass transition temperature between about -55 °C and about 100 °C may be synthesized. In addition, when the glass transition temperature of the homopolymer of the monomers used is already known, the calculated glass transition temperature may be obtained using Fox's equation from the volume fraction of these monomer compounds, and by synthesizing a styrene-acrylic acid ester-based copolymer referring to the above and performing differential scanning calorimetry (DSC), a styrene-acrylic acid ester-based copolymer with a glass transition temperature of greater than or equal to about -20 °C and less than or equal to about 20 °C can be obtained.

In the above example embodiment, the negative electrode has been described, but a positive electrode having an electrode mixture layer or base layer of the same configuration is also possible.

In addition, the positive or negative electrode may be formed without a base layer (adhesive layer) and the positive or negative electrode mixture layer may be formed directly on the positive or negative electrode current collector.

The electrode according to the example embodiments is not limited to a non-aqueous electrolyte rechargeable battery, and may be applied to rechargeable batteries in general, and for example, may be applied to a semisolid rechargeable battery or an all-solid-state rechargeable battery having a solid electrolyte layer.

In addition, the present disclosure is not limited to these example embodiments, and various modifications are of course possible without departing from the spirit thereof.

### Example:

Hereinafter, the present disclosure is described in more detail based on the following examples. However, the following examples are merely examples of the present disclosure, and the present disclosure is not limited thereto.

### Example 1:

### Preparation of Chestnut-burr-shaped Silicon-based Active Material (S1):

A silicon-based active material and carbon nanotubes (SWCNTs) were added to an aqueous solution of carboxymethyl cellulose (CMC), a first binder, and stirred so that 0.75 parts by mass of the carbon nanotubes (SWCNTs) were added to 100 parts by mass of the silicon-based active material. The solid was then obtained by drying at 103 °C in air and further drying in a vacuum at 80 °C for 6 hours. The obtained solid was pulverized with a mortar to obtain a powdered active material-conductive agent composite (S1) (also called a chestnut-burr-shaped silicon-based active material (S1)).

### Manufacturing of Dry Negative Electrode Sheet (D1):

The chestnut-burr-shaped silicon-based active material (S1), the carbon-based negative electrode active material, the second binder, fibril-shaped PTFE, and the third binder, particulate-shaped PVDF, were mixed in a ratio of 4:94:1:1 (by mass), stretched into a sheet shape, and placed in contact with a base layer formed on a negative electrode current collector made of a 10 µm-thick copper foil, by pressing, thereby obtaining a dry negative electrode sheet (D1). Meanwhile, in the mass ratios of Examples and Comparative Examples, the mass ratio of S1 is calculated using the mass of the silicon-based active material used as a starting material. The base layer included a styrene-butadiene copolymer, acetylene black, and polyacrylic acid in a mass ratio of 60:28:12.

### Example 2:

A silicon-based active material and carbon nanotubes (SWCNTs) were added to an aqueous solution of CMC, a first binder, and stirred so that 2.25 parts by mass of the carbon nanotubes (SWCNTs) were added to 100 parts by mass of the silicon-based active material. The solid was then obtained by drying at 103 °C in air and further drying in a vacuum at 80 °C for 6 hours. The obtained solid was pulverized with a mortar to obtain a powdered active material-conductive agent composite (S2) (also called a chestnut-burr-shaped silicon-based active material (S2)).

### Manufacturing of Dry Negative Electrode Sheet (D2):

The chestnut-burr-shaped silicon-based active material (S2), the carbon-based negative electrode active material, the second binder, fibril-shaped PTFE, and the third binder, particulate-shaped PVDF, were mixed in a ratio of 4:94:1:1 (by mass), stretched into a sheet shape, and pressed onto a 10 µm-thick copper foil negative electrode current collector to obtain a dry negative electrode sheet (D2).

### Example 3:

A silicon-based active material and single-walled carbon nanotubes (SWCNTs), which are a conductive agent, were added to an aqueous solution of CMC, which is a first binder, and stirred so that 0.25 parts by mass of the carbon nanotubes (SWCNTs) were added to 100 parts by mass of the silicon-based active material. The solid was then obtained by drying at 103 °C in air and further drying in a vacuum at 80 °C for 6 hours. The obtained solid was pulverized with a mortar to obtain a powdered active material-conductive agent composite (S3), also called a chestnut-burr-shaped silicon-based active material (S3).

### Manufacturing of Dry Negative Electrode Sheet (D3):

The chestnut-burr-shaped silicon-based active material (S3), the carbon-based negative electrode active material, the second binder, fibril-shaped PTFE, and the third binder, particulate-shaped PVDF, were mixed in a ratio of 4:94:1:1 (by mass), stretched into a sheet shape, and pressed onto a 10 µm-thick copper foil negative electrode current collector to obtain a dry negative electrode sheet (D3).

### Example 4:

Silicon-based active material and carbon nanotubes (SWCNTs), which are the first binder, were added to an NMP solution of PVDF and stirred so that 0.25 parts by mass of the carbon nanotubes (SWCNTs) were added to 100 parts by mass of the silicon-based active material. The solid was then obtained by drying at 120 °C in the air and also by vacuum drying at 120 °C for 6 hours. The obtained solid was pulverized with a mortar to obtain a powdered active material-conductive agent composite (S4), also called a chestnut-burr-shaped silicon-based active material (S4).

### Manufacturing of Dry Negative Electrode Sheet (D4):

The chestnut-burr-shaped silicon-based active material (S4), the carbon-based negative electrode active material, the fibril-shaped PTFE as the second binder, and the particulate-shaped PVDF as the third binder were mixed in a ratio of 4:94:1:1 (by mass), stretched into a sheet shape, and pressed onto a 10 µm-thick copper foil negative electrode current collector to obtain a dry negative electrode sheet (D4).

### Example 5:

### Manufacturing of Dry Negative Electrode Sheet (D5):

The chestnut-burr-shaped silicon-based active material (S1), the carbon-based negative electrode active material, the second binder, fibril-shaped PTFE, and the third binder, particulate-shaped PVDF were mixed in a ratio of 4:94:0.5:1 (by mass), stretched into a sheet, and pressed onto a 10 µm-thick copper foil negative electrode current collector to obtain a dry negative electrode sheet (D5).

### Example 6:

### Manufacturing of Dry Negative Electrode Sheet (D6):

The chestnut-burr-shaped silicon-based active material (S1), the carbon-based negative electrode active material, the second binder, fibril-shaped PTFE, and the third binder, particulate-shaped PVDF, were mixed in a ratio of 4:94:0.5:2 (by mass), stretched into a sheet, and pressed onto a 10 µm-thick copper foil negative electrode current collector to obtain a dry negative electrode sheet (D6).

### Example 7:

### Manufacturing of Dry Negative Electrode Sheet (D7):

The chestnut-burr-shaped silicon-based active material (S1), the carbon-based negative electrode active material, the second binder, fibril-shaped PTFE, and the third binder, particulate-shaped PVDF were mixed in a ratio of 4:94:0.3:1 (by mass), stretched into a sheet shape, and pressed onto a 10 µm-thick copper foil negative electrode current collector to obtain a dry negative electrode sheet (D7).

### Example 8:

### Manufacturing of Dry Negative Electrode Sheet (D8):

The chestnut-burr-shaped silicon-based active material (S1), the carbon-based negative electrode active material, the second binder, fibril-shaped PTFE, and the third binder, particulate-shaped PVDF were mixed in a ratio of 4:94:0.3:2 (by mass), stretched into a sheet shape, and pressed onto a 10 µm-thick copper foil negative electrode current collector to obtain a dry negative electrode sheet (D8).

### Comparative Example 1:

### Manufacturing of Comparative Dry Negative Electrode Sheet (R1):

An untreated silicon-based active material (S0), a carbon-based negative electrode active material, a conductive agent, and a second binder, fibril-shaped PTFE, were mixed in a ratio of 4:94:0.03:1 (by mass), stretched into a sheet shape, and pressed onto a 10 µm-thick copper foil negative electrode current collector to obtain a dry negative electrode sheet (R1). The compositions of Examples 1 to 8 and Comparative Example 1 described above are summarized in Table 1 below.

**Table 1:**

| Examples (negative electrode sheet) | Active material conductive agent composite | Amount of silicon-based active material [wt%] | Amount of conductive agent [wt%] | Conductive agent/active material (mass ratio) | Amount of first binder [wt%] | Amount of second binder [wt%] | Amount of third binder [wt%] |
|---|---|---|---|---|---|---|---|
| Comparative Example 1 (R1) | - | 4 | 0.03 | 0.75 | - | 1 | - |
| Example 1 (D1) | S1 | 4 | 0.03 | 0.75 | 0.045 | 1 | 1 |
| Example 2 (D2) | S2 | 4 | 0.09 | 2.25 | 0.100 | 1 | 1 |
| Example 3 (D3) | S3 | 4 | 0.01 | 0.25 | 0.015 | 1 | 1 |
| Example 4 (D4) | S4 | 4 | 0.01 | 0.25 | 0.050 | 1 | 1 |
| Example 5 (D5) | S1 | 4 | 0.03 | 0.75 | 0.045 | 0.5 | 1 |
| Example 6 (D6) | S1 | 4 | 0.03 | 0.75 | 0.045 | 0.5 | 2 |
| Example 7 (D7) | S1 | 4 | 0.03 | 0.75 | 0.045 | 0.3 | 1 |
| Example 8 (D8) | S1 | 4 | 0.03 | 0.75 | 0.045 | 0.3 | 2 |

### Manufacturing of Half Cells for Testing:

The dry negative electrode sheets (D1 to D7) or the dry negative electrode sheet (R1) were laminated with a metal lithium foil through a separator, sandwiched with an aluminum laminate film, the edges of the aluminum laminate film except for a portion were heat-welded, and after electrolyte injection, all edges were heat-welded and sealed in a vacuum to produce a half-cell for testing. A portion of each of the metal lithium foil and the negative electrode is designed to protrude from the laminate film so as not to break the vacuum of the battery, and the portions that protrude are used as terminals.

### Evaluation of Half Cells for Testing:

The charge/discharge characteristics of the half-cell manufactured in this manner were evaluated under the following conditions. The measurements were performed by placing the half-cell in a constant temperature bath at 25 °C. Pressure application was performed by sandwiching the half-cell between two resin plates and inserting a clip between the two plates so that a predetermined pressure was applied to the electrode surface. The battery was charged for 15 hours at a constant current of 0.7 mA/cm², and then discharged at a constant current of 0.7 mA/cm² until the battery voltage reached 1.5 V. This was repeated twice, and the charge/discharge capacity ratio (=discharge capacity/charge capacity) and the electrode plate expansion % (=thickness of the electrode mixture layer after charging/thickness before charging) of the first and second times were compared. The results are shown in Table 2 below.

### Manufacturing of Full Cell for Testing:

Each of dry negative electrode sheets (D1 to D7) or dry negative electrode sheet (R1) were laminated with the positive electrode through a separator, sandwiched with an aluminum laminate film, the edges of the aluminum laminate film except for a portion were heat-welded, and after electrolyte injection, all edges were heat-welded and sealed in a vacuum to manufacture full cells for testing. A portion of each of the positive and negative electrodes is designed to protrude from the laminate film so as not to break the vacuum of the battery, and these protruding portions are designated as positive and negative terminals, respectively.

### Evaluation of Full Cell for Testing:

Full cells using the negative electrodes manufactured in Examples 1 to 8 and Comparative Example 1 were charged under constant current up to 4.25 V at 0.5 CA of the design capacity in a constant temperature bath at 25 °C, and then constant voltage was charged until the voltage became 0.05 CA at 4.25 V. The initial discharge capacity was then obtained by performing a constant current discharge to 2.8 V at 0.5 CA. Additionally, a cycle-life test was conducted by performing 100 cycles under the same conditions. The capacity retention rate after 100 cycles was measured by dividing the discharge capacity after 100 cycles by the initial discharge capacity. The results are shown in Table 2 below.

**Table 2:**

| Examples (negative electrode sheet) | ICE [%] | 2nd CE [%] | Expansion rate [%] | Capacity retention rate after 100 cycles [%] |
|---|---|---|---|---|
| Comparative Example 1 (R1) | 88.2 | 97.8 | 35.3 | 88.1 |
| Example 1 (D1) | 90.2 | 98.8 | 24.9 | 94.5 |
| Example 2 (D2) | 89.2 | 98.7 | 26.0 | 94.0 |
| Example 3 (D3) | 90.0 | 98.8 | 27.3 | 93.7 |
| Example 4 (D4) | 89.5 | 98.7 | 26.5 | 94.7 |
| Example 5 (D5) | 89.9 | 98.8 | 25.3 | 94.5 |
| Example 6 (D6) | 89.8 | 98.8 | 21.4 | 94.5 |
| Example 7 (D7) | 89.9 | 98.8 | 28.9 | 94.1 |
| Example 8 (D8) | 89.7 | 98.8 | 28.4 | 94.4 |

From the results in Table 2 above, the negative electrode mixture layer including the chestnut-burr-shaped active material-conductive agent composite, in which the conductive agent is bonded to the surface of the active material by the first binder so as to extend in the diameter direction of the active material, can maintain the charge-discharge capacity ratio to be substantially high and substantially reduce or suppress expansion rates of electrode plates, even when the negative electrode mixture layer is manufactured by the dry method.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the spirit and scope of the appended claims.

## Claims

1. An active material-conductive agent composite, comprising:
an active material capable of intercalating and deintercalating lithium,
a conductive agent, and
a first binder that binds the active material and the conductive agent,
wherein:
the active material is in a form of spherical particles, and
the conductive agent is bound to a surface of the active material so as to elongate in a diametric direction of the active material by the first binder.

2. The active material-conductive agent composite as claimed in claim 1, wherein the conductive agent is in a fibrous form.

3. The active material-conductive agent composite as claimed in
claim 1 or 2, wherein the active material comprises a silicon-based active material.

4. An electrode for a rechargeable battery, the electrode comprising:
the active material-conductive agent composite as claimed in any one of claims 1 to 3,
a second binder that is a different binder from the first binder, and
a third binder that is the same as or different from the first binder,
wherein the second binder is in a fibril form comprising a fluorine-based polymer.

5. The electrode as claimed in claim 4, wherein the second binder and the third binder bind a plurality of the active material-conductive agent composite to each other.

6. The electrode as claimed in claim 4 or 5, wherein:
the electrode comprises a current collector, an electrode mixture layer, and a conductive adhesive layer between the current collector and the electrode mixture layer, and
the electrode mixture layer comprises the active material-conductive agent composite, the second binder, and the third binder.

7. The electrode as claimed in any one of claims 4 to 6, wherein:
the conductive adhesive layer comprises a carbon material, a binder for a base layer, and a dispersant, and
the binder for the base layer comprises a styrene-butadiene copolymer or a styrene-acrylic acid ester-based copolymer.

8. A rechargeable battery, comprising:
a positive electrode (114) and a negative electrode,
wherein the negative electrode (112) comprises the electrode as claimed in any one of claims 4 to 7.

9. A non-aqueous electrolyte rechargeable battery, comprising:
a positive electrode (114) and a negative electrode (112),
the negative electrode (112) comprises the electrode as claimed in any one of claims 4 to 6.
